# EUROPEAN PATENT SPECIFICATION

(11) **EP 1 980 903 B1**
(45) Date of publication and mention of the grant of the patent: **16.05.2012**
(21) Application number: 07025120.2
(22) Date of filing: 27.12.2007
(51) Int. Cl.: G02F 1/1339, G02F 1/1362, G02F 1/1333

(54) **Liquid crystal display device and method of fabricating the same**
Flüssigkristallanzeigevorrichtung und Herstellungsverfahren dafür
Dispositif d'affichage à cristaux liquides et son procédé de fabrication

(30) Priority: 09.04.2007 KR 20070034743
(43) Date of publication of application: 15.10.2008
(73) Proprietor: LG Display Co., Ltd., Youngdungpo-gu, Seoul (KR)
(72) Inventor: Kim, Jin Wuk, Uiwang-si Gyonggi-do (KR); Song, Tae Joon, Suwon-si Gyeonggi-do (KR)
(74) Representative: TER MEER - STEINMEISTER & PARTNER GbR

(56) References cited:
- JP-A- 2002 055 359
- US-A- 5 835 171
- US-A1- 2003 137 621
- US-A1- 2004 126 942
- US-A1- 2006 060 890
- US-A1- 2006 197 892
- US-A1- 2006 203 178
- US-A1- 2006 290 025
- US-A1- 2007 002 259
- US-B1- 6 462 802

## Description

This application claims the benefit of Korean Patent Application No. P2007-34743 filed April 9, 2007, which is hereby incorporated by reference as if fully set forth herein.

### BACKGROUND OF THE INVENTION

### Field of the Invention

The present invention relates to a liquid crystal display device and a method of fabricating the same.

### Discussion of the Related Art

Recently, various mobile-type electronic devices, for example, mobile phones, PDAs, notebook computers, etc. are used widely, whereby there is increasing demand for a thin and light flat panel display device. Examples of the flat panel display device are liquid crystal display LCD, plasma display panel PDP, field emission display FED, and vacuum fluorescent display VFD. Among the various examples of flat panel display device, the liquid crystal display LCD has attracted great attentions owing to the advantages of mass production, simple driving means and high resolution and picture quality.

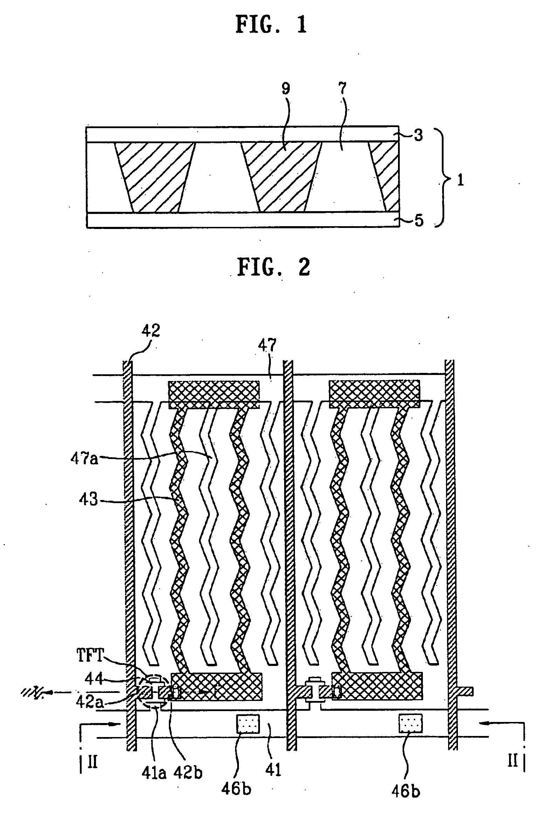

FIG. 1 is a cross section view illustrating a liquid crystal display device according to the related art. As shown in FIG. 1, the liquid crystal display device according to the related art includes a lower substrate 5, an upper substrate 3, and a liquid crystal layer 7 formed between the lower substrate 5 and the upper substrate 3.

The lower substrate 5 corresponds to a thin film transistor array substrate, which includes a plurality of pixel regions, wherein a thin film transistor is formed in each of the pixel region.

The upper substrate 3 corresponds to a color filter substrate, which includes a color filter layer to realize colors.

Also, pixel electrodes and a common electrode are formed on the lower substrate 5 and the upper substrate 3, respectively. In addition, the lower and upper substrates 5 and 3 are coated with alignment films to align liquid crystal molecules included in the liquid crystal layer 7.

Then, spacers 9 are provided between the lower substrate 5 and the upper substrate 3, to maintain a cell gap therebetween. Also, the liquid crystal layer 7 is formed between the lower substrate 5 and the upper substrate 3. According as the liquid crystal molecules included in the liquid crystal layer 7 are driven by the thin film transistor formed on the lower substrate 5, an amount of light passing through the liquid crystal layer is controlled so that information is displayed.

The liquid crystal display device uses electro-optic effects which are determined based on anisotropy of liquid crystal and alignment of liquid crystal molecules. Thus, the display stability in the liquid crystal display device is largely affected by the control for the alignment of liquid crystal molecules.

The processes of forming the alignment film to align the liquid crystal molecules and forming the spacers to maintain the cell gap with a seal pattern are greatly related with the picture quality in the liquid crystal cell.

However, if scattering the spacers by a related art method, the spacers exist in the pixel region through which light transmits. The spacers existing in the pixel region may disturb the alignment of liquid crystal, and lower an aperture ratio. In this respect, the density of spacers has to be controlled under a predetermined level. Also, it is necessary to obtain the uniformity in providing the spacers on an entire screen.

If providing the high density of spacers, it is useful to maintain the cell gap between the two substrates. In this case, a contrast ratio may be lowered due to deterioration of a black display function since the spacer causes dispersion of light and disorder of alignment in its circumference.

In order to overcome this problem, a method of providing column spacers has been proposed recently, which forms spacers directly patterned on the lower or upper substrate. The column spacer can be fabricated by steps of depositing or coating organic polymer material on a substrate and carrying out photolithography to selectively remove the deposited or coated organic polymer material.

However, the photolithography is comprised of coating, exposure and development of photoresist, so that it necessarily requires an additional mask, thereby causing the complicated process and increasing cost.

US 2006/197892 A2 describes a reflection type display device and a method for using the same. The display device includes a first substrate having a color filter and a second substrate including a thin film transistor array, wherein the first and second substrate facing each other. The thin film transistor array is covered by a corner cube array including an insulating layer, a metal layer and a plurality of projections. The projection are serving as spacers defining an interval between the first and second substrate.

US 2004/126942 A1 describes a data pad region of a LCD panel and a fabrication method thereof.

### SUMMARY OF THE INVENTION

Accordingly, the present invention is directed to a liquid crystal display device and a method of fabricating the same that substantially obviates one or more problems due to limitations and disadvantages of the related art.

An object of the present invention is to provide a liquid crystal display device to simplify the process and decrease the fabrication cost, and a method of fabricating the same.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

The object is solved by the features of the independent claims.

At this time, the first column spacer is brought into contact with the first substrate.

In addition, the device comprises a second column spacer formed as one body with the first passivation film.

Also, the first and second column spacers have the different heights from each other.

Also, the first passivation film and the first and second column spacers are formed of an organic insulation material comprised of ultra-violet curable liquid pre-polymer, photo-initiator and surfactant.

Also, the device comprises a third passivation film on the first passivation film.

Also, the second and third passivation films are formed of an inorganic insulation material.

Also, the second substrate comprises gate and data lines crossing each other to define a pixel region on the second substrate; and a pixel electrode connected to a predetermined portion of the thin film transistor and formed in the pixel region, and a liquid crystal layer formed between the first and second substrates.

Also, the pattern material layer is formed of an organic insulation material comprised of ultra-violet curable liquid pre-polymer, photo-initiator and surfactant.

Also, the soft mold is provided with embossing patterns for formation of the contact hole, and depressed patterns for formation of the column spacer.

The soft mold is formed of any one of DMS (polydimethylsiloxane), polyurethane or polyimide.

In addition, the method comprises curing the pattern material layer by applying heat or light to the substrate in state of contacting the soft mold to the substrate including the pattern material layer.

Further, the method comprises forming a second column spacer when forming the contact hole, the first passivation film and the first column spacer.

Also, the first column spacer has such a height as to contact with the first substrate, and the second column spacer is different from the first column spacer in height.

The soft mold is provided with depressed patterns for formation of the second column spacer.

In addition, the method comprises forming a third passivation film between the first passivation film and the pixel electrode.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a cross section diagram illustrating a related art liquid crystal display device;

FIG. 2 is a plan diagram illustrating one liquid crystal display device according to the present invention;

FIG. 3 is a cross section diagram illustrating a liquid crystal display device according to the first embodiment of the present invention, along I-I' and II-II' of FIG. 2;

FIGs. 4A to 4D are cross section diagrams illustrating a method of fabricating a liquid crystal display device according to the first embodiment of the present invention;

FIG. 5 is a cross section diagram illustrating a liquid crystal display device according to the second embodiment of the present invention, along I-I' and II-II' of FIG. 2;

FIGs. 6A to 6E are cross section diagrams illustrating a method of fabricating a liquid crystal display device according to the second embodiment of the present invention;

FIG. 7 is a cross section diagram illustrating a liquid crystal display device according to the third embodiment of the present invention, along I-I' and II-II' of FIG. 2;

FIGs. 8A to 8B are cross section diagrams illustrating a method of fabricating a liquid crystal display device according to the third embodiment of the present invention;

FIG. 9 is a plan diagram illustrating another liquid crystal display device according to the present invention;

FIG. 10 ifs a cross section diagram illustrating a liquid crystal display device according to the fourth embodiment of the present invention, along I-I' and II-II' of FIG. 9;

FIGs. 11A to 11D are cross section diagrams illustrating a method of fabricating a liquid crystal display device according to the fourth embodiment of the present invention;

FIG. 12 is a cross section diagram illustrating a liquid crystal display device according to the fifth embodiment of the present invention, along I-I' and II-II' of FIG. 9;

FIGs. 13A to 13E are cross section diagrams illustrating a method of fabricating a liquid crystal display device according to the fifth embodiment of the present invention;

FIG. 14 is a cross section diagram illustrating a liquid crystal display device according to the sixth embodiment of the present invention, along I-I' and II-II' of FIG. 9; and

FIGs. 15A and 15B are cross section diagrams illustrating a method of fabricating a liquid crystal display device according to the sixth embodiment of the present invention.

### DETAINED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

Hereinafter, a liquid crystal display device according to the present invention and a method of fabricating the same will be explained with reference to the accompanying drawings.

### First embodiment

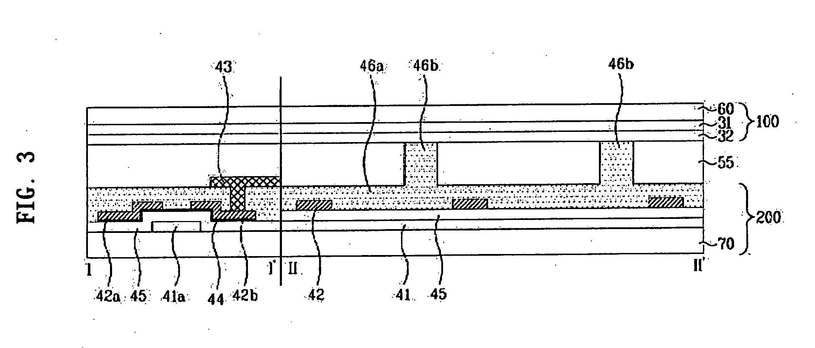

FIG. 2 is a plan diagram illustrating one liquid crystal display device according to the present invention. FIG. 3 is a cross section diagram illustrating a liquid crystal display device according to the first embodiment of the present invention, along I-I' and II-II' of FIG. 2.

As shown in FIGs. 2 and 3, the liquid crystal display device according to the first embodiment of the present invention includes a color filter substrate 100, a TFT substrate 200, and a liquid crystal layer 55 formed by injecting liquid crystal into a space between the color filter substrate 100 and the TFT substrate 200.

The color filter substrate 100 includes a black matrix layer 31 and a R/G/B color filter layer 32 on a substrate 60, wherein the black matrix layer 31 prevents light from leaking in other regions (regions of gate line, data line and thin film transistor) except pixel regions, and the R/G/B color filter layer 32 is provided in the pixel regions to represent colors therein. In addition, there is an overcoat layer (not shown) formed on an entire surface of the black matrix layer 31 and the R/G/B color filter layer 32.

In opposite to the color filter substrate 100, the TFT substrate 200 includes a plurality of gate lines 41 and a plurality of data lines 42 on a substrate 70, wherein each gate line 41 is orthogonal to each data line 42 to thereby define each pixel region. In addition, a common line 47 is formed in parallel to the gate line 41, and common electrodes 47a are diverged from the common line 47 toward the inside of pixel region, wherein the common electrodes 47a are formed at fixed intervals. At each crossing of the gate and data lines 41 and 42, there is a thin film transistor TFT including source and drain electrodes 42a and 42b. Also, pixel electrodes 43 are connected to the drain electrode of the thin film transistor within the pixel region, wherein the pixel electrode 43 alternates with the common electrode 47a in parallel within the pixel region.

In this case, the substrates 60 and 70 may be formed of glass or plastic. Also, a gate insulation film 45 is formed between the gate line 41 and the data line 42. A semiconductor layer 44 is formed on the gate insulation film 45 above the gate electrode 41. Then, a passivation film 46a is formed between the thin film transistor TFT and the pixel electrode 43. Simultaneously, a column spacer 46b is formed of the same material as the passivation film 46a.

The column spacer 46b maintains a cell gap between the two substrates, and the column spacer 46 is brought into contact with the color filter substrate 100. At this time, the passivation film 46a and the column spacer 46b are formed as one body by completing steps of depositing an organic insulation material of ultra-violet curable liquid pre-polymer on the substrate 70 including the thin film transistor TFT, and carrying out In-Plane Printing using a soft mold provided with a pattern having an inverted shape of the passivation film 46a and the column spacer 46b.

Accordingly, the liquid crystal display device according to the first embodiment of the present invention includes the passivation film 46a and the column spacer 46b which are formed by the In-Plane Printing using the soft mold. In comparison to a related art process of forming a column spacer by photolithography using coating, exposure and development of photoresist, the In-Plane Printing using the soft mold has more simplified process and more decreased fabrication cost.

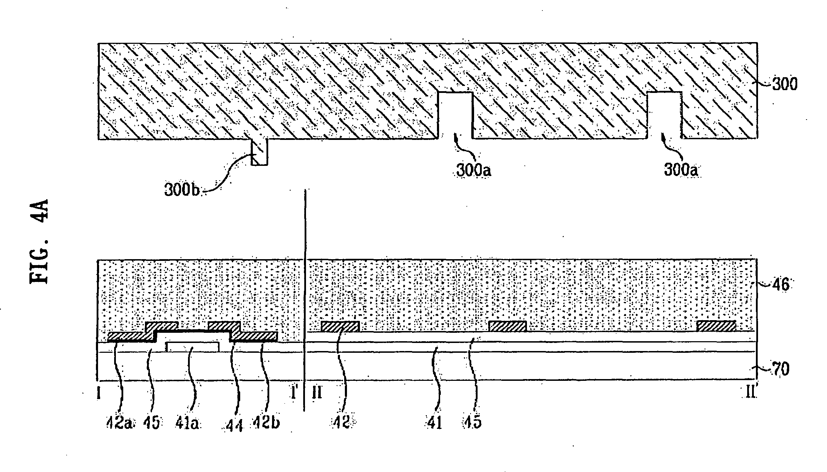

FIGs. 4A to 4D are cross section diagrams illustrating a method of fabricating the liquid crystal display device according to the first embodiment of the present invention.

After forming a gate metal layer on the substrate 70, the gate metal layer is patterned by photolithography, thereby forming gate patterns including the gate line 41 and a gate electrode 41a, as shown in FIG. 4A. Then, the gate insulation film 45 is formed on the substrate 70 including the gate patterns.

Subsequently, an amorphous silicon layer of n⁺-type amorphous silicon layer is formed on the substrate 70 including the gate insulation film 45, and is then patterned by photolithography, thereby forming the semiconductor layer 44. At this time, the semiconductor layer 44 is formed in a double-layered structure comprised of an active layer and an ohmic contact layer. Then, a source/drain metal layer is formed on the substrate 70 including the semiconductor layer 44, and is then patterned by photolithography, thereby forming source/drain patterns including the data line 42, and the source and drain electrodes 42a and 42b. Then, a pattern material layer 46 is formed on the substrate 70 including the source/drain patterns.

At this time, the pattern material layer 46 is comprised of ultra-violet curable liquid pre-polymer, photo-initiator and surfactant. Generally, the ultra-violet curable liquid pre-polymer is used of ultra-violet curable acrylate pre-polymer, for example, HEA(2-Hydroxyehyl acrylate), EGDMA(Ethyleneglycol dimethancrylate), EGPEA(Ethyleneglycol phenyletheracrylate), HPA(Hydroxypropyl acrylate), and HPPA(Hydroxyl phenoxypropyl acrylate).

Then, the soft mold 300 is prepared, of which rear surface is provided with a backplane and front surface is provided with embossing patterns 300b and depressed patterns 300a above the substrate including the pattern material layer 46. The soft mold 300 may be fabricated by curing elastic polymer such as PDMS (polydimethylsiloxane). Also, the soft mold 300 may be formed of polyurethane or polyimide. In this case, the soft mold 300 is provided with the embossing pattern 300b for formation of the contact hole, and the depressed pattern 300a for formation of the column spacer.

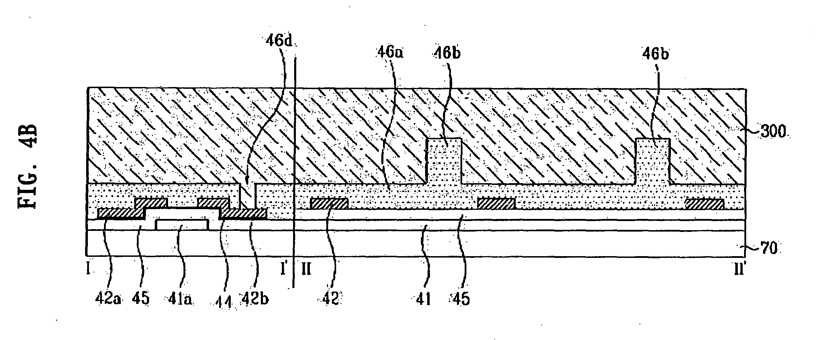

As shown in FIG. 4B, after aligning the soft mold 300 and the substrate 70 having the pattern material layer 46, the surface of soft mold 300 is brought into contact with the pattern material layer 46, thereby forming the passivation film 46a, the column spacer 46b, and the contact hole 46d for exposing the drain electrode 42b in the pattern material layer 46, wherein the column spacer 46b corresponds to the depressed pattern 300a of the soft mold 300, and the contact hole 46d corresponds to the embossing pattern 300a of the soft mold 300. At this time, in state of that the soft mold 300 is brought into contact with the pattern material layer 46, heat or light is applied thereto to thereby cure the pattern material layer 46.

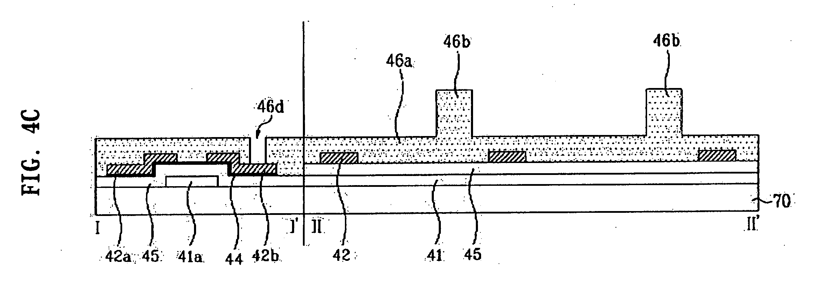

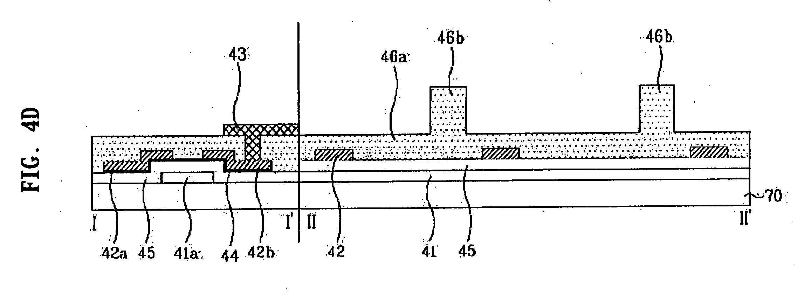

As shown in FIG. 4C, the soft mold 300 is separated from the passivation film 46a having the contact hole 46d and the pattern material layer 46 having the column spacer 46b. Next, as shown in FIG. 4D, a transparent conductive film is formed on the passivation film 46a having the contact hole 46d, and is then patterned by photolithography, thereby forming the pixel electrode 43 connected to the drain electrode 42b, and completing the process.

Accordingly, the passivation film 46a and the column spacer 46b are formed by In-Plane Printing using the soft mold. In comparison to a related art process of forming a column spacer by photolithography using coating, exposure and development of photoresist, the In-Plane Printing using the soft mold can realize more simplified process and more decreased fabrication cost.

### Second embodiment

A liquid crystal display device provided with a passivation film having a double-layered structure and a cell-gap column spacer and a method of fabricating the same will be explained as follows.

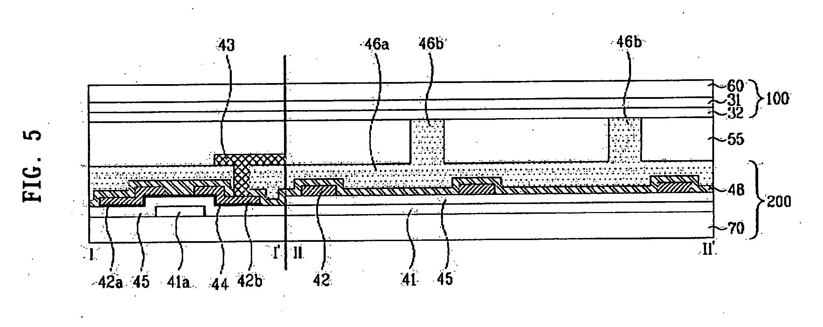

FIG. 5 is a cross section diagram illustrating a liquid crystal display device according to the second embodiment of the present invention, along I-I' and II-II' of FIG. 2.

First, as shown in FIG. 5, the liquid crystal display device according to the second embodiment of the present invention includes a color filter substrate 100, a TFT substrate 200, and a liquid crystal layer 55 formed by injecting liquid crystal into a space between the color filter substrate 100 and the TFT substrate 200.

The color filter substrate 100 includes a substrate 60, a black matrix layer 31, a R/G/B color filter layer 32, and an overcoat layer (not shown). The TFT substrate 200 positioned in opposite to the color filter substrate 100 includes a substrate 70, a gate line 41, a data line 42, a common line 47, a common electrode 47a, source and drain electrodes 42a and 42b, a pixel electrode 43, a gate insulation film 45, and a semiconductor layer 44. At this time, the substrates 60 and 70 may be formed of glass or plastic.

In addition, a first passivation film 48 and a second passivation film 46a are formed between the thin film transistor TFT and the pixel electrode 43. Simultaneously, a column spacer 46b is formed of the same material as the second passivation film 46a. The column spacer 46b maintains a cell gap between the two substrates, and the column spacer 46 is brought intro contact with the color filter substrate 100. At this time, the column spacers 57 are provided at fixed intervals on the gate line 41.

The first passivation film 48 is formed of an inorganic insulation material such as SiNx, to thereby improve the interfacial stability between the second passivation film 46a of organic insulation material including photo ultra-violet curable liquid pre-polymer and the source and drain electrodes 42a and 42b/data line 42/gate insulation film 45. At this time, the second passivation film 46a and the column spacer 46b are formed as one body by completing steps of depositing an organic insulation material of ultra-violet curable liquid pre-polymer on the substrate 70 including the thin film transistor TFT, and carrying out In-Plane Printing using a soft mold provided with a pattern having an inverted shape of the second passivation film 46a and the column spacer 46b.

Accordingly, the liquid crystal display device according to the second embodiment of the present invention includes the second passivation film 46a and the column spacer 46b which are formed by the In-Plane Printing using the soft mold. In comparison to a related art process of forming a column spacer by photolithography using coating, exposure and development of photoresist, the In-Plane Printing using the soft mold has more simplified process and more decreased fabrication cost. Furthermore, since the first passivation film 48 of inorganic insulation material is formed under the second passivation film 46a, the interfacial stability improves between the second passivation film 46a of organic insulation material and the contacting layers.

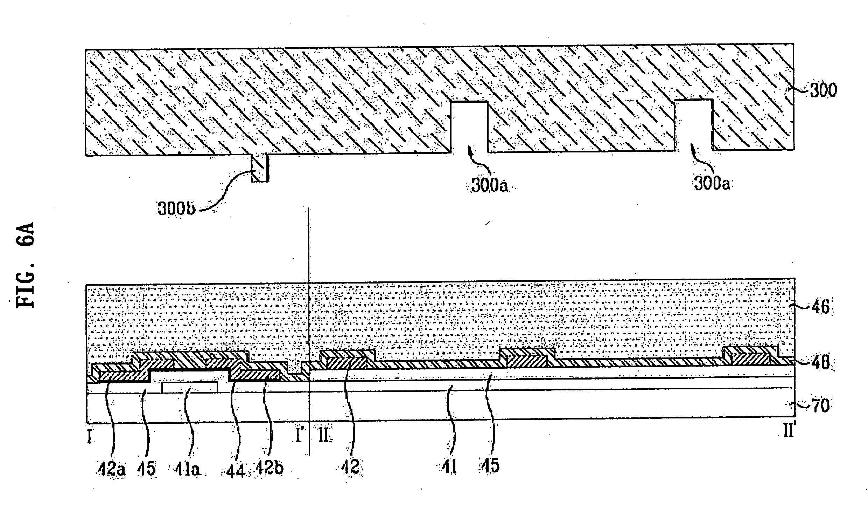

FIGs. 6A to 6E are cross section diagrams illustrating a method of fabricating a liquid crystal display device according to the second embodiment of the present invention.

As shown in FIG. 6A, there are a gate pattern including the gate line 41 and a gate electrode 41a; the gate insulation film 45; the semiconductor layer 44; and source/drain patterns including the data line 42 and the source and drain electrodes 42a and 42b on the substrate 70. Then, the first passivation film 48 of inorganic insulation material, for example, SiNx is formed on the substrate 70, and a pattern material layer 46 is formed on the first passivation film 48.

Thereafter, a soft mold 300 is prepared, of which rear surface is provided with a backplane and front surface is provided with embossing patterns 300b and depressed patterns 300a above the substrate 70 including the pattern material layer 46. In this case, the soft mold 300 is provided with the embossing pattern 300b for formation of the contact hole, and the depressed pattern 300a for formation of the column spacer.

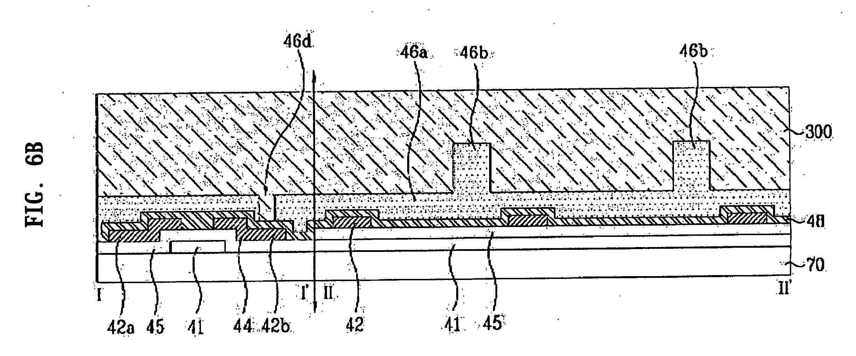

As shown in FIG. 6B, after aligning the soft mold 300 and the substrate 70 having the pattern material layer 46, the surface of soft mold 300 is brought into contact with the pattern material layer 46, thereby forming the second passivation film 46a, the column spacer 46b and the contact hole 46d for exposing the drain electrode 42b in the pattern material layer 46, wherein the column spacer 46b corresponds to the depressed pattern 300a of the soft mold 300, and the contact hole 46d corresponds to the embossing pattern 300a of the soft mold 300. At this time, in state of that the soft mold 300 is brought into contact with the pattern material layer 46, heat or light is applied thereto to thereby cure the pattern material layer 46.

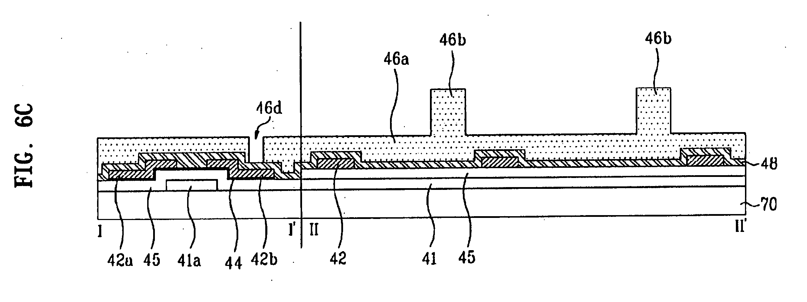

Next, as shown in FIG. 6C, the soft mold 300 is separated from the second passivation film 46a having the contact hole 46d and the pattern material layer 46 having the column spacer 46b.

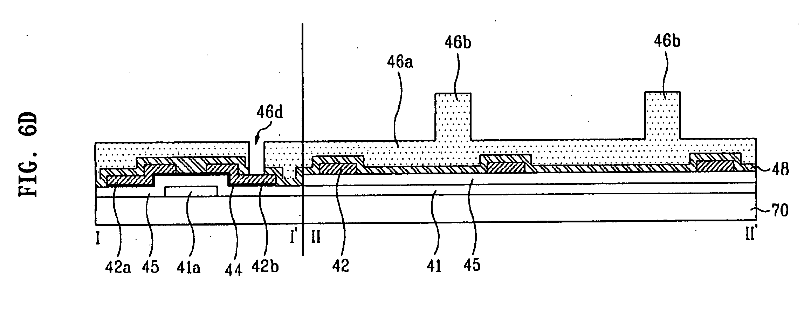

As shown in FIG. 6D, an etching process is performed in state of using the second passivation film 46a having the contact hole 46d as an etching mask, thereby forming the contact hole 46d for exposing the drain electrode 42b.

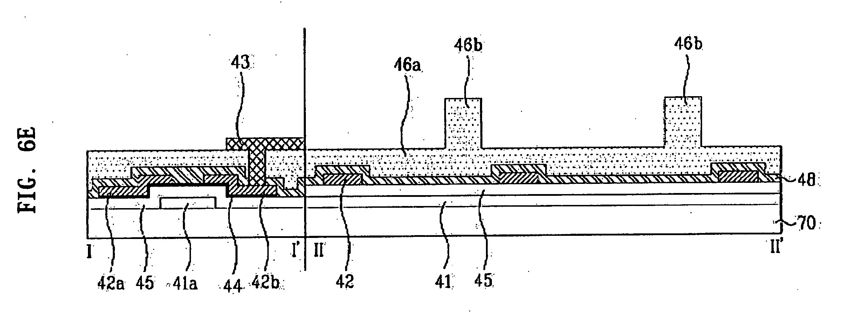

As shown in FIG. 6E, a transparent conductive film is formed on the substrate 70 including the contact hole 46d, and is then patterned by photolithography, thereby forming the pixel electrode 43 connected to the drain electrode 42b and completing the process.

Accordingly, the liquid crystal display device according to the second embodiment of the present invention includes the second passivation film 46a and the column spacer 46b formed by In-Plane Printing using the soft mold. In comparison to a related art process of forming a column spacer by photolithography using coating, exposure and development of photoresist, the In-Plane Printing using the soft mold can realize more simplified process and more decreased fabrication cost. Furthermore, the first passivation film 48 of inorganic insulation material is formed under the second passivation film 46a of organic insulation material, whereby the interfacial stability improves between the second passivation film 46a of organic insulation material and the contacting layers.

### Third embodiment

A liquid crystal display device provided with a passivation film having a three-layered structure and a cell-gap column spacer and a method of fabricating the same will be explained as follows.

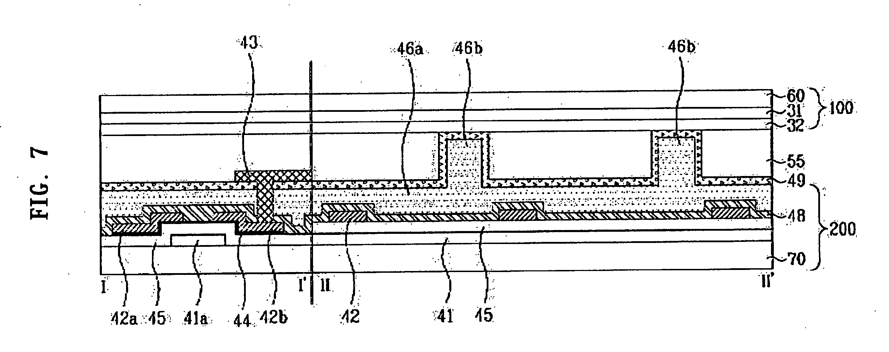

FIG. 7 is a cross section diagram illustrating a liquid crystal display device according to the third embodiment of the present invention, along I-I' and II -II' of FIG. 2.

As shown in FIG. 7, the liquid crystal display device according to the third embodiment of the present invention includes a color filter substrate 100, a TFT substrate 200, and a liquid crystal layer 55 formed by injecting liquid crystal into a space between the color filter substrate 100 and the TFT substrate 200.

The color filter substrate 100 includes a substrate 60, a black matrix layer 31, a R/G/B color filter layer 32, and an overcoat layer (not shown). The TFT substrate 200 positioned in opposite to the color filter substrate 100 includes a substrate 70, a gate line 41, a data line 42, a common line 47, a common electrode 47a, source and drain electrodes 42a and 42b, a pixel electrode 43, a gate insulation film 45, and a semiconductor layer 44. At this time, the substrates 60 and 70 may be formed of glass or plastic.

In addition, a first passivation film 48, a second passivation film 46a and a third passivation film 49 are formed between the thin film transistor TFT and the pixel electrode 43, and simultaneously a column spacer 46b is formed of the same material as the second passivation film 46a. The column spacer 46b maintains a cell gap between the two substrates, and the column spacer 46b is brought into contact with the color filter substrate 100.

The first and third passivation films 48 and 49 are formed of an inorganic insulation material such as SiNx. Thus, the first passivation film 48 is provided to improve the interfacial stability between the second passivation film 46a of organic insulation material including photo ultra-violet curable liquid pre-polymer and the source and drain electrodes 42a and 42b/data line 42/gate insulation film 45. The third passivation film 49 is provided to improve the interfacial stability between the second passivation film 46a and the pixel electrode 46.

The second passivation film 46a and the column spacer 46b are formed as one body by completing steps of depositing an organic insulation material of ultra-violet curable liquid pre-polymer on the substrate 70 including the thin film transistor TFT, and carrying out In-Plane Printing using a soft mold provided with a pattern having an inverted shape of the second passivation film 46a and the column spacer 46b.

Accordingly, the liquid crystal display device according to the third embodiment of the present invention includes the second passivation film 46a and the column spacer 46b which are formed by the In-Plane Printing using the soft mold. In comparison to a related art process of forming a column spacer by photolithography using coating, exposure and development of photoresist, the In-Plane Printing using the soft mold has more simplified process and more decreased fabrication cost. Furthermore, since the first and third passivation film 48 and 49 of inorganic insulation material are respectively formed on and under the second passivation film 46a, the interfacial stability improves between the second passivation film 46a of organic insulation material and the contacting layers.

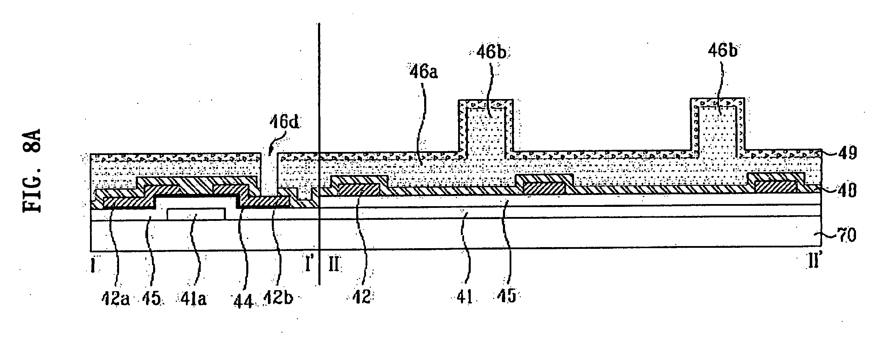

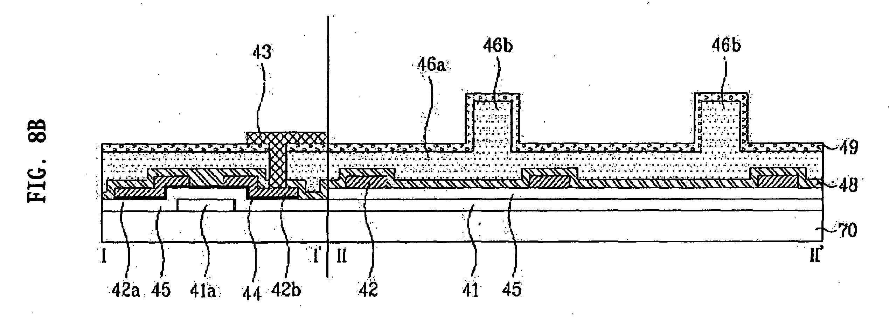

A method of fabricating the liquid crystal display device according to the present invention will be explained with reference to FIGs. 8A and 8B.

The process until forming the column spacer 46b, the passivation film 46a and the contact hole 46d for exposing the drain electrode 42b is same as the process of FIGs. 6A to 6D according to the second embodiment of the present invention. Thereafter, as shown in FIG. 8A, the third passivation film 49 of inorganic insulation material, for example, SiNx is formed on the second passivation film 46a.

Then, as show in FIG. 8B, a transparent conductive film is formed on the substrate 70 including the contact hole 46d, and is then patterned by photolithography, thereby forming the pixel electrode 43 connected to the drain electrode 42b, and completing the process.

Accordingly, the liquid crystal display device according to the third embodiment of the present invention includes the second passivation film 46a and the column spacer 46b formed by In-Plane Printing using the soft mold. In comparison to a related art process of forming a column spacer by photolithography using coating, exposure and development of photoresist, the In-Plane Printing using the soft mold can realize more simplified process and more decreased fabrication cost. Furthermore, the first and third passivation films 48 and 49 of inorganic insulation material are respectively formed on and under the second passivation film of organic insulation material, thereby improving the interfacial stability between the second passivation film 46a and the contacting layers.

### Fourth embodiment

A liquid crystals display device provided with a pressed-down prevention column spacer 46c as well as a cell-gap column spacer 46b and a method of fabricating the same will be explained with reference to the accompanying drawings.

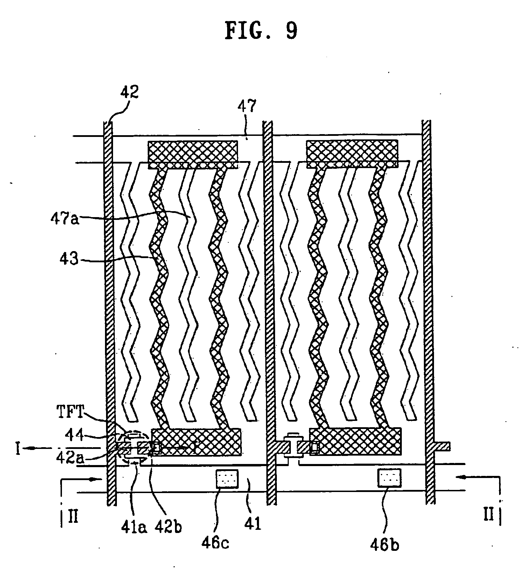

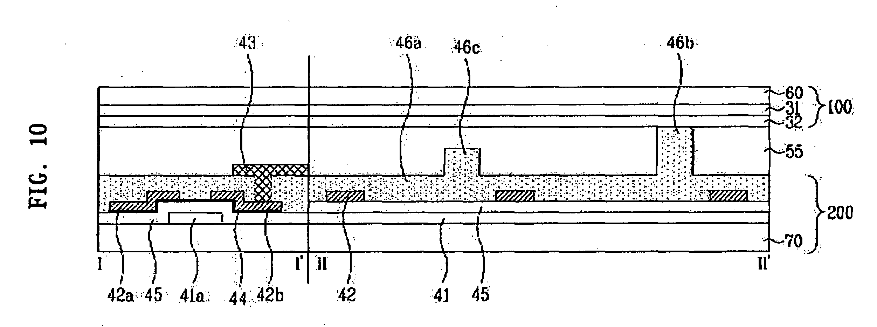

FIG. 9 is a plan diagram illustrating another liquid crystal display device according to the present invention. FIG. 10 is a cross section diagram illustrating a liquid crystal display device according to the fourth embodiment of the present invention, along I-I' and II-II' of FIG. 9.

As shown in FIGs. 9 and 10, the liquid crystal display device according to the fourth embodiment of the present invention includes a color filter substrate 100, a TFT substrate 200, and a liquid crystal layer 55 formed by injecting liquid crystal into a space between the color filter substrate 100 and the TFT substrate 200.

The color filter substrate 100 includes a substrate 60, a black matrix layer 31, a R/G/B color filter layer 32, and an overcoat layer (not shown). The TFT substrate 200 positioned in opposite to the color filter substrate 100 includes a substrate 70, a gate line 41, a data line 42, a common line 47, a common electrode 47a, source and drain electrodes 42a and 42b, a pixel electrode 43, a gate insulation film 45, and a semiconductor layer 44. At this time, the substrates 60 and 70 may be formed of glass or plastic.

In addition, a passivation film 46a is formed between the thin film transistor TFT and the pixel electrode 43. Simultaneously, first and second column spacers 46b and 46c are formed of the same material as the passivation film 46a. The first column spacer 46b corresponds to a cell-gap column spacer to maintain a cell gap between the two substrates, wherein the first column spacer 46b is brought into contact with the color filter substrate 100. The second column spacer 46c is provided to prevent a liquid crystal panel from being pressed down, wherein the second column spacer 46c has such a height as not to contact with the color filter substrate 100. Accordingly, the liquid crystal display device according to the fourth embodiment of the present invention is provided with dual column spacers comprised of the first and second column spacers 46b and 46c to maintain the cell gap and to prevent the liquid crystal panel from being pressed down.

At this time, the passivation film 46a and the first and second column spacers 46b and 46c are formed as one body by completing steps of depositing an organic insulation material of ultra-violet curable liquid pre-polymer on the substrate 70 including the thin film transistor TFT, and carrying out In-Plane Printing using a soft mold provided with a pattern having an inverted shape of the passivation film 46a and the first and second column spacers 46b and 46c.

Accordingly, the liquid crystal display device according to the fourth embodiment of the present invention includes the passivation film 46a and the first and second column spacers 46b and 46c which are formed by the In-Plane Printing using the soft mold. In comparison to a related art process of forming a column spacer by photolithography using coating, exposure and development of photoresist, the In-Plane Printing using the soft mold has more simplified process and more decreased fabrication cost.

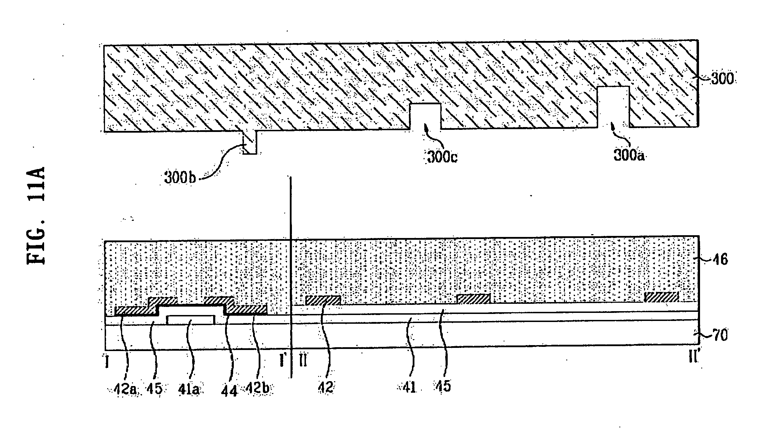

A method of fabricating the liquid crystal display device according to the fourth embodiment of the present invention will be explained with reference to FIGS. 11A to 11D.

As shown in FIG. 11A, there are a gate pattern including the gate line 41 and a gate electrode 41a; the gate insulation film 45; the semiconductor layer 44; and source/drain patterns including the data line 42 and the source and drain electrodes 42a and 42b on the substrate 70.

Thereafter, a soft mold 300 is prepared, of which rear surface is provided with a backplane and front surface is provided with embossing patterns 300b and depressed patterns 300a and 300c above the substrate 70 including the pattern material layer 46. In this case, the soft mold 300 is provided with the embossing pattern 300b for formation of the contact hole, and the depressed pattern 300a for formation of the first and second column spacers 300a and 300c.

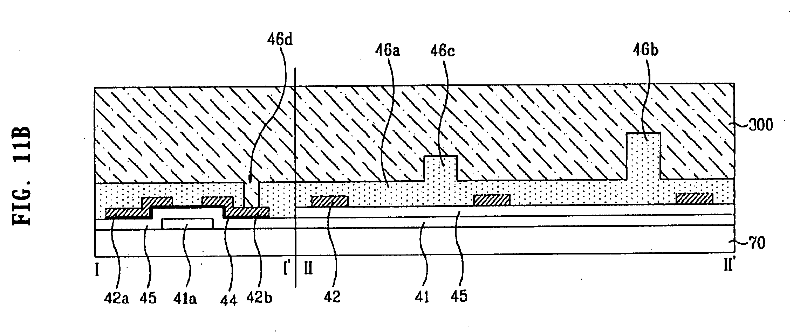

As shown in FIG. 11B, after aligning the soft mold 300 and the substrate 70 having the pattern material layer 46, the surface of soft mold 300 is brought into contact with the pattern material layer 46, thereby forming the passivation film 46a, the first and second column spacer 46b and 46c, and the contact hole 46d for exposing the drain electrode 42b in the pattern material layer 46, wherein the first and second column spacer 46b and 46c correspond to the depressed pattern 300a and 300c of the soft mold 300, and the contact hole 46d corresponds to the embossing pattern 300b of the soft mold 300. At this time, in state of that the soft mold 300 is brought into contact with the pattern material layer 46, heat or light is applied thereto to thereby cure the pattern material layer 46. At this time, the first column spacer 46b has such a height as to contact with the color filter substrate 100. The second column spacer 46c has such a height as not to contact with the color filter substrate 100, wherein the second column spacer 46c prevents the liquid crystal panel from being pressed down.

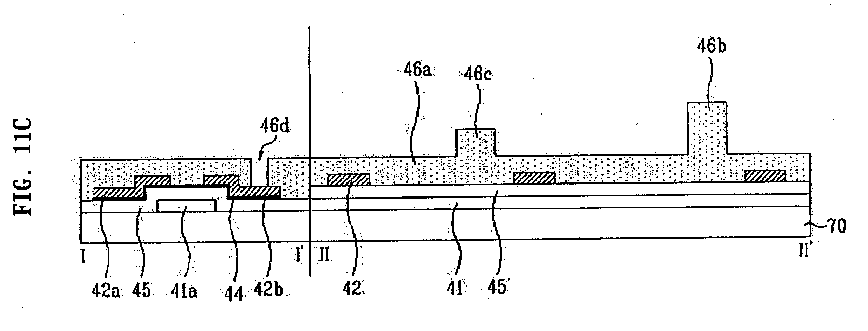

As shown in FIG. 11C, the soft mold 300 is separated from the passivation film 46a having the contact hole 46d and the pattern material layer 46 having the first and second column spacers 46b and 46c.

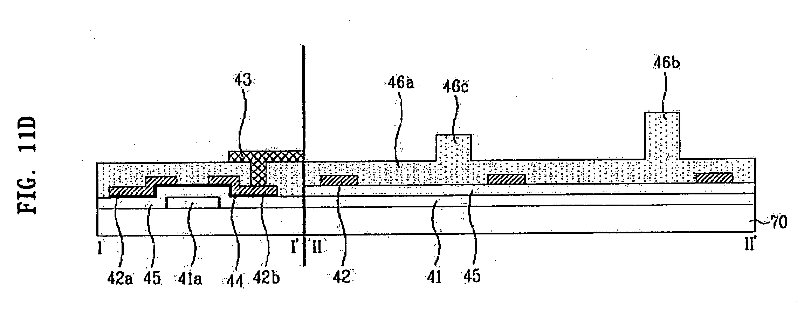

Next, as shown in FIG. 11D, a transparent conductive film is formed on the passivation film 46a having the contact hole 46d, and is then patterned by photolithography, thereby forming the pixel electrode 43 connected to the drain electrode 42b, and completing the process.

Accordingly, the liquid crystal display device according to the fourth embodiment of the present invention includes the passivation film 46a and the first and second column spacers 46b and 46c formed by In-Plane Printing using the soft mold. In comparison to a related art process of forming a column spacer by photolithography using coating, exposure and development of photoresist, the In-Plane Printing using the soft mold can realize more simplified process and more decreased fabrication cost.

### Fifth embodiment

A liquid crystal display device provided with a passivation film having a dual-layered structure, a cell-gap column spacer 46b and a pressed-down prevention column spacer 46c and a method of fabricating the same will be explained with reference to the accompanying drawings.

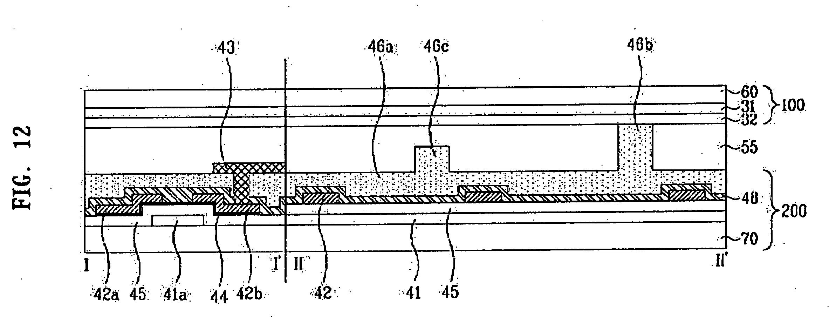

FIG. 12 is a cross section diagram illustrating a liquid crystal display device according to the fifth embodiment of the present invention, along I-I' and II-II' of FIG. 9.

As shown in FIG. 12, the liquid crystal display device according to the fifth embodiment of the present invention includes a color filter substrate 100, a TFT substrate 200, and a liquid crystal layer 55 formed by injecting liquid crystal into a space between the color filter substrate 100 and the TFT substrate 200.

The color filter substrate 100 includes a substrate 60, a black matrix layer 31, a R/G/B color filter layer 32, and an overcoat layer (not shown). The TFT substrate 200 positioned in opposite to the color filter substrate 100 includes a substrate 70, a gate line 41, a data line 42, a common line 47, a common electrode 47a, source and drain electrodes 42a and 42b, a pixel electrode 43, a gate insulation film 45, and a semiconductor layer 44. At this time, the substrates 60 and 70 may be formed of glass or plastic.

In addition, first and second passivation films 48 and 46a are formed between the pixel electrode 43 and the thin film transistor TFT, and simultaneously first and second column spacers 46b and 46c are formed of the same material as the second passivation film 46a. The first column spacer 46b corresponds to a cell-gap column spacer to maintain a cell gap between the two substrates, wherein the first column spacer 46b is brought into contact with the color filter substrate 100. The second column spacer 46b is provided to prevent a liquid crystal panel from being pressed down, wherein the second column spacer 46b has such a height as not to contact with the color filter substrate 100. Accordingly, the liquid crystal display device according to the fifth embodiment of the present invention is provided with dual column spacers comprised of the first and second column spacers 46b and 46c to maintain the cell gap and to prevent the liquid crystal panel from being pressed down.

The first passivation film 48 is formed of an inorganic insulation material such as SiNx, to thereby improve the interfacial stability between the second passivation film 46a of organic insulation material including photo ultra-violet curable liquid pre-polymer and the source and drain electrodes 42a and 42b/data line 42/gate insulation film 45. Also, the second passivation film 46a and the first and second column spacers 46b and 46c are formed as one body by completing steps of depositing an organic insulation material of ultra-violet curable liquid pre-polymer on the substrate 70 including the thin film transistor TFT, and carrying out In-Plane Printing using a soft mold provided with a pattern having an inverted shape of the second passivation film 46a and the first and second column spacers 46b and 46c.

Accordingly, the liquid crystal display device according to the fifth embodiment of the present invention includes the second passivation film 46a and the first and second column spacers 46b and 46c which are formed by the In-Plane Printing using the soft mold. In comparison to a related art process of forming a column spacer by photolithography using coating, exposure and development of photoresist, the In-Plane Printing using the soft mold has more simplified process and more decreased fabrication cost. Furthermore, the first passivation film 48 of inorganic insulation material is formed under the second passivation film 46a of organic insulation material, thereby improving the interfacial stability between the second passivation film 46a and the contacting layers.

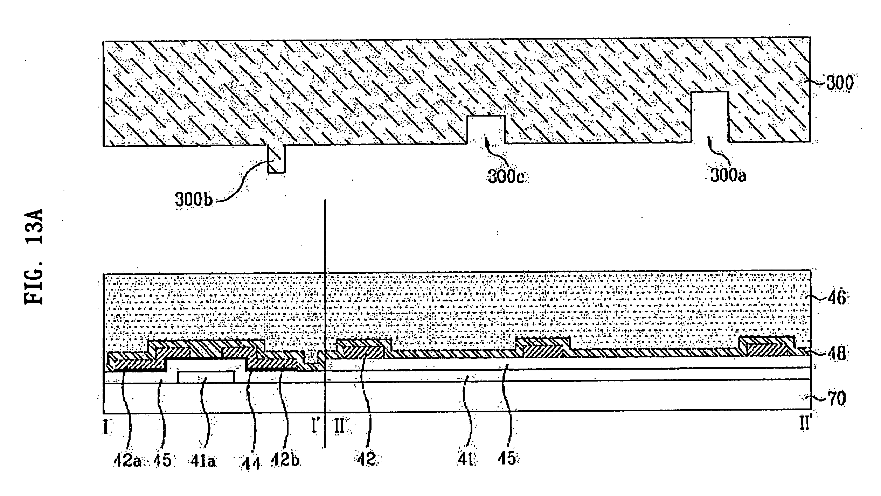

A method of fabricating the liquid crystal display device according to the fifth embodiment of the present invention will be explained with reference to FIGs. 13A to 13E.

As shown in FIG. 13A, there are a gate pattern including the gate line 41 and a gate electrode 41a; the gate insulation film 45; the semiconductor layer 44; and source/drain patterns including the data line 42 and the source and drain electrodes 42a and 42b on the substrate 70. Then, the first passivation film 48 of inorganic insulation material, for example, SiNx is formed on the substrate 70 including the source/drain patterns, and a pattern material layer 46 is formed on the first passivation film 48.

Thereafter, a soft mold 300 is prepared, of which rear surface is provided with a backplane and front surface is provided with embossing patterns 300b and depressed patterns 300a and 300c above the substrate 70 including the pattern material layer 46. In this case, the soft mold 300 is provided with the embossing pattern 300b for formation of the contact hole, and the depressed pattern 300a and 300c for formation of the first and second column spacers.

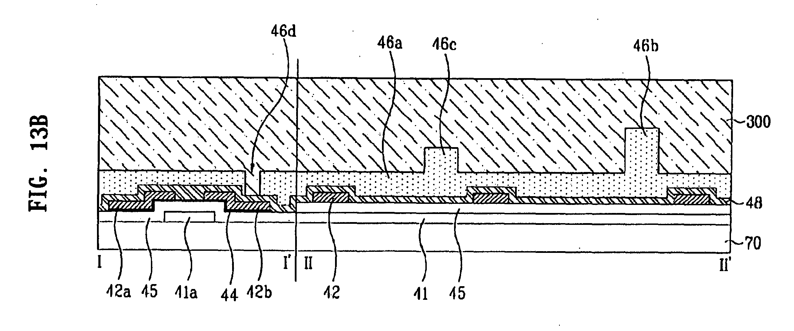

As shown in FIG. 13B, after aligning the soft mold 300 and the substrate 70 having the pattern material layer 46, the surface of soft mold 300 is brought into contact with the pattern material layer 46, thereby forming the second passivation film 46a, the first and second column spacer 46b and 46c, and the contact hole 46d for exposing the drain electrode 42b in the pattern material layer 46, wherein the first and second column spacers 46b and 46c correspond to the depressed patterns 300a and 300c of the soft mold 300, and the contact hole 46d corresponds to the embossing pattern 300b of the soft mold 300. At this time, in state of that the soft mold 300 is brought into contact with the pattern material layer 46, heat or light is applied thereto to thereby cure the pattern material layer 46.

At this time, the first column spacer 46b corresponds to the cell-gap column spacer to maintain the cell gap between the two substrates, wherein the first column spacer 46b is brought into contact with the color filter substrate 100. The second column spacer 46b is provided to prevent the liquid crystal panel from being pressed down, wherein the second column spacer 46b has such a height as not to contact with the color filter substrate 100.

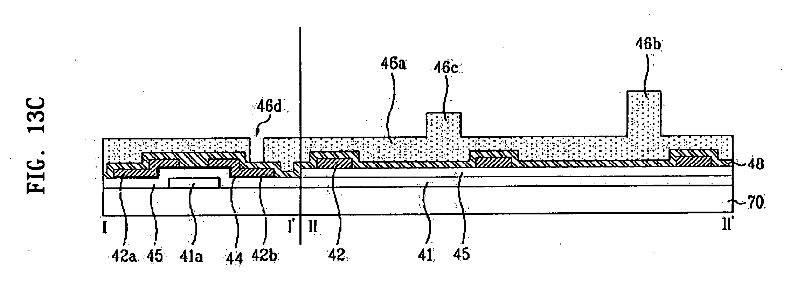

Next, as shown in FIG. 13C, the soft mold 300 is separated from the second passivation film 46a having a hole 46e corresponding to the contact hole and the pattern material layer 46 having the first and second column spacers 46b and 46c.

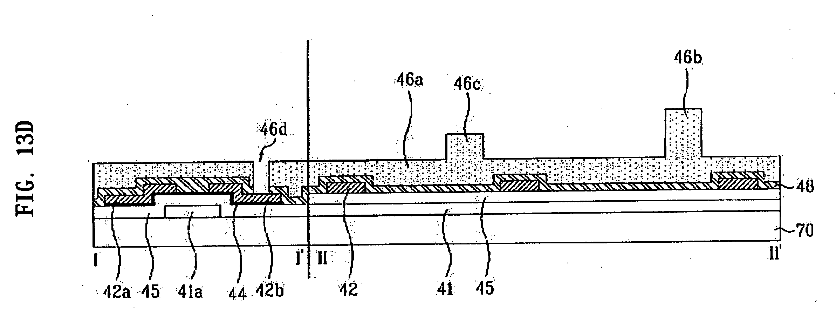

As shown in FIG. 13D, an etching process is performed in state of using the second passivation film 46a having the hole 46e corresponding to the contact hole as an etching mask, thereby forming the contact hole 46d for exposing the drain electrode 42b.

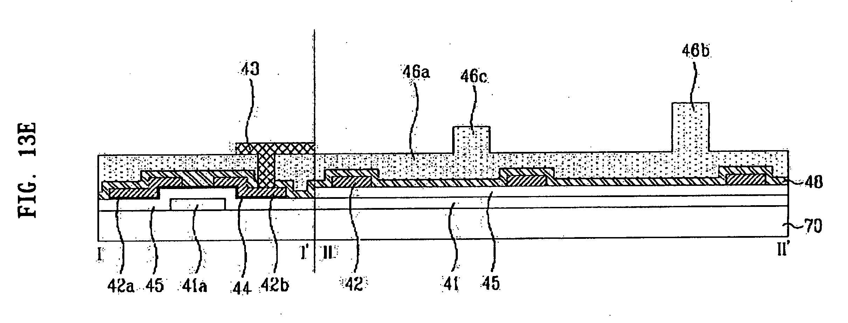

As shown in FIG. 13E, a transparent conductive film is formed on the second passivation film 46a including the contact hole 46d, and is then patterned by photolithography, thereby forming the pixel electrode 43 connected to the drain electrode 42b and completing the process.

Accordingly, the liquid crystal display device according to the fifth embodiment of the present invention includes the second passivation film 46a and the first and second column spacers 46b and 46c formed by In-Plane Printing using the soft mold. In comparison to a related art process of forming a column spacer by photolithography using coating, exposure and development of photoresist, the In-Plane Printing using the soft mold can realize more simplified process and more decreased fabrication cost. Furthermore, the first passivation film 48 of inorganic insulation material is formed under the second passivation film 46a of organic insulation material, whereby the interfacial stability improves between the second passivation film 46a of organic insulation material and the contacting layers.

### Sixth embodiment

A liquid crystal display device provided with a passivation film having a three-layered structure, a cell-gap column spacer 46b and a pressed-down column spacer 46c and a method of fabricating the same will be explained as follows.

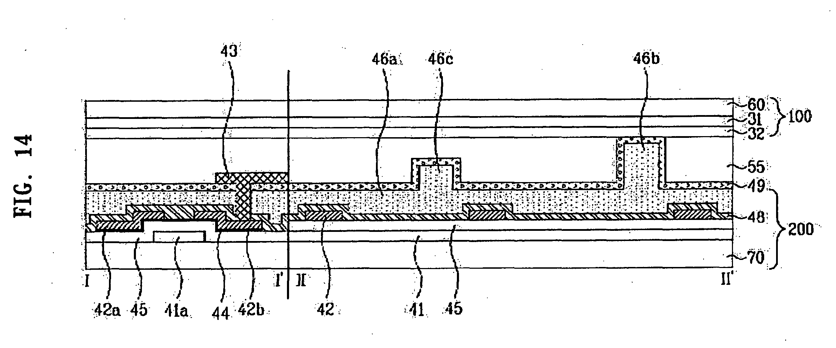

FIG. 14 is a cross section diagram illustrating a liquid crystal display device according to the sixth embodiment of the present invention, along I-I' and II-II' of FIG. 9.

As shown in FIG. 14, the liquid crystal display device according to the sixth embodiment of the present invention includes a color filter substrate 100, a TFT substrate 200, and a liquid crystal layer 55 formed by injecting liquid crystal into a space between the color filter substrate 100 and the TFT substrate 200.

The color filter substrate 100 includes a substrate 60, a black matrix layer 31, a R/G/B color filter layer 32, and an overcoat layer (not shown). The TFT substrate 200 positioned in opposite to the color filter substrate 100 includes a substrate 70, a gate line 41, a data line 42, a common line 47, a common electrode 47a, source and drain electrodes 42a and 42b, a pixel electrode 43, a gate insulation film 45, and a semiconductor layer 44. At this time, the substrates 60 and 70 may be formed of glass or plastic.

In addition, a first passivation film 48, a second passivation film 46a and a third passivation film 49 are formed between the pixel electrode 43 and the thin film transistor TFT, and simultaneously first and second column spacers 46b and 46c are formed of the same material as the second passivation film 46a. The first column spacer 46b corresponds to a cell-gap column spacer to maintain a cell gap between the two substrates, wherein the first column spacer 46b is brought into contact with the color filter substrate 100. The second column spacer 46c is provided to prevent a liquid crystal panel from being pressed down, wherein the second column spacer 46c has such a height as not to contact with the color filter substrate 100.

The first and third passivation films 48 and 49 are formed of an inorganic insulation material such as SiNx. The first passivation film 48 improves the interfacial stability between the second passivation film 46a of organic insulation material including photo ultra-violet curable liquid pre-polymer and the source and drain electrodes 42a and 42b/data line 42/gate insulation film 45. Also, the third passivation film 49 improves the interfacial stability between the pixel electrode 43 and the second passivation film 46a.

At this time, the second passivation film 46a and the first and second column spacers 46b and 46c are formed as one body by completing steps of depositing an organic insulation material of ultra-violet curable liquid pre-polymer on the substrate 70 including the thin film transistor TFT, and carrying out In-Plane Printing using a soft mold provided with a pattern having an inverted shape of the second passivation film 46a and the first and second column spacers 46b and 46c.

Accordingly, the liquid crystal display device according to the sixth embodiment of the present invention includes the second passivation film 46a and the first and second column spacers 46b and 46c which are formed by the In-Plane Printing using the soft mold. In comparison to a related art process of forming a column spacer by photolithography using coating, exposure and development of photoresist, the In-Plane Printing using the soft mold has more simplified process and more decreased fabrication cost. Furthermore, the first and third passivation films 48 and 49 of inorganic insulation material are respectively formed on and under the second passivation film 46a of organic insulation material, thereby improving the interfacial stability between the second passivation film 46a and the contacting layers.

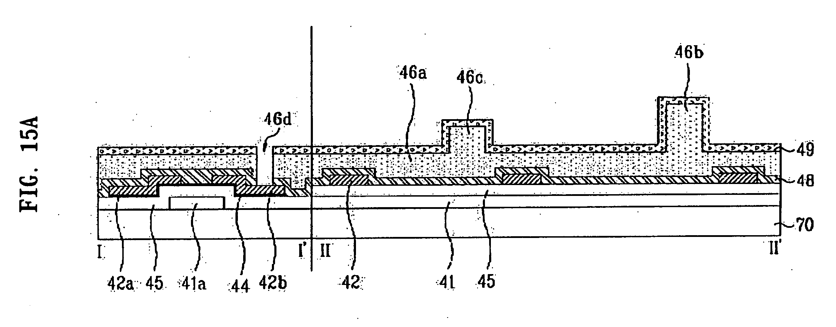

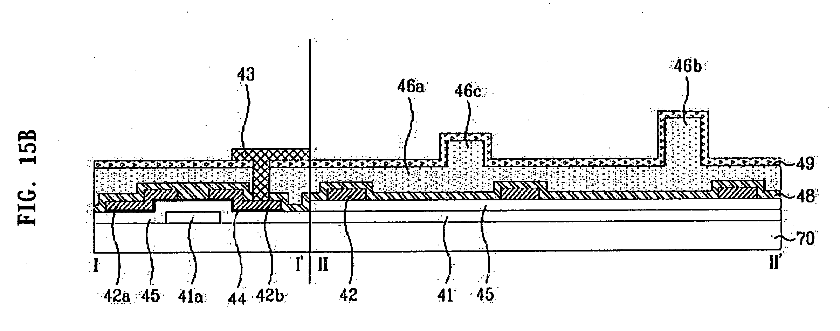

FIGs. 15A and 15B are cross section diagrams illustrating a method of fabricating a liquid crystal display device according to the sixth embodiment of the present invention.

The process until forming,the column spacer 46b, the passivation film 46a, the first and second column spacers 46b and 46c and the contact hole 46d for exposing the drain electrode 42b is same as the process of FIGs. 13A to 13D according to the fifth embodiment of the present invention. Thereafter, as shown in FIG. 15A, the third passivation film 49 of inorganic insulation material, for example, SiNx is formed on the second passivation film 46a.

Then, as show in FIG. 15B, a transparent conductive film is formed on the substrate 70 including the contact hole 46d, and is then patterned by photolithography, thereby forming the pixel electrode 43 connected to the drain electrode 42b, and completing the process.

Accordingly, the liquid crystal display device according to the sixth embodiment of the present invention includes the second passivation film 46a and the first and second column spacers 46b and 46c formed by In-Plane Printing using the soft mold. In comparison to a related art process of forming a column spacer by photolithography using coating, exposure and development of photoresist, the In-Plane Printing using the soft mold can realize more simplified process and more decreased fabrication cost. Furthermore, the first and third passivation films 48 and 49 of inorganic insulation material are respectively formed on and under the second passivation film 46a of organic insulation material, whereby the interfacial stability improves between the second passivation film 46a of organic insulation material and the contacting layers.

As mentioned above, the liquid crystal display device according to the present invention and the method of fabricating the same have the following advantages.

The liquid crystal display device according to the present invention includes the passivation film and the column spacer which are formed by In-Plane Printing using the soft mold. In comparison to a related art process of forming a column spacer by photolithography using coating, exposure and development of photoresist, the In-Plane Printing using the soft mold has more simplified process and more decreased fabrication cost.

In the liquid crystal display device according to the present invention, there is the passivation film of inorganic insulation material between the passivation film of organic insulation material and the contacting layers, thereby improving the interfacial stability between the passivation film of organic insulation material and the contacting layers.

It will be apparent to those skilled in the art that various modifications and variations can be made in the present invention without departing from the scope of the inventions. Thus, it is intended that the present invention covers the modifications and variations of this invention provided they come within the scope of the appended claims and their equivalents.

## Claims

1. A liquid crystal display device comprising:
a first substrate (100) having a color filter; and
a second substrate (200) having a thin film transistor and a pixel electrode (43) connected to a drain electrode (42b) of the thin film transistor through a contact hole (46d), the first and second substrates (100, 200) facing each other;
a first passivation film (46a) formed on the thin film transistor;
a first column spacer (46b) for maintaing a cell gap is formed as one body with the first passivation film (46b); **characterised by**
a second column spacer (46c) preventing the first substrate (100) from being pressed drown, the second column spacer (46c) is formed as one body with the first passivation film (46a) and having a height lower than the first column spacer (46b) contacting the first substrat (100); and
a second passivation film (48) between the thin film transistor and the first passivation film (46a) for enhancing the interfacial stability, the first and second passivation films (46a,48) have different materials from each other;
wherein the contact hole (46d) for exposing the drain electrode (42d) is formed in the first and second passivation film (46a, 48);
wherein the first passivation film (46a) and the first and second column spacers (46b, 46c) are formed of an organic insulation material comprised of ultra-violet curable liquid pre-polymer, photo-initiator and surfactant.

2. The liquid crystal display device of claim 1, wherein the first column spacer (46b) is brought into contact with the first substrate (100).

3. The liquid crystal display device of claim 1, further comprising a third passivation film (49) on the first passivation film (46a).

4. The liquid crystal display device of claim 1 or 3, wherein the second passivation film (48) and third passivation film (49) are formed of an inorganic insulation material. '

5. A method of fabricating a liquid crystal display device comprising:
preparing a first substrate (100) having a color filter (32);
forming a thin film transistor on a second substrate (200) facing the first substrate (100);
forming a second passivation film (48) on the second substrate (200) including the thin film transistor for enhancing the interfacial stability;
forming a pattern material layer (46) on the second passivation film (48);
aligning a soft mold (300) and the second substrate (200) including the pattern material layer (46), the soft mold (300) being provided with embossing patterns (300b) for formation of a hole corresponding to a contact hole (46d) and first depressed pattern (300a) for formation of a first column spacer (46b) for maintain a cell gap and second depressed pattern (300c) for formation of a second column spacer (46c) preventing the first substrate (100) from being pressed down
forming the first passivation film (46a) having the hole (46d), the first column spacer (46b) and second column spacer (46c) by contacting the soft mold (300) to the pattern material layer (46), wherein the embossing pattern (300b) contacts with the second passivation film (48) on the thin film transistor, wherein the first column spacer (46b) has a height to contact with the first substrate (100), and the second column spacer (46c) has a lower height than the first column spacer (46b);
separating the soft mold (300) from the pattern material layer (46); and
etching the second passivation film (48) using the first passivation film (46a) as etching mask to form the contact hole (46d) for exposing a drain electrode (42d) of the thin film transistor,
forming a pixel electrode (43) in the contact hole (46d),
wherein the pattern material layer (46) is formed of an organic insulation material comprised of ultra-violet curable liquid pre-polymer, photo-initiator and surfactant.

6. The method of claim 5, wherein the soft mold (300) is formed of any one of PDMS (polydimethylsiloxane), polyurethane or polyimide.

7. The method of claim 5, further comprising curing the pattern material layer (46) by applying heat or light to the substrate in state of contacting the soft mold (300) to the substrate including the pattern material layer (46).

8. The method of claim 5, further comprising forming a third passivation film (49) between the first passivation film (46a) and the pixel electrode (43).

## Patentansprüche

1. Flüssigkristallanzeigevorrichtung, die Folgendes umfasst:
ein erstes Substrat (100), das einen Farbfilter aufweist; und
ein zweites Substrat (200), das einen Dünnschichttransistor und eine Pixelelektrode (43), die durch ein Kontaktloch (46d) mit einer Drainelektrode (42b) des Dünnschichttransistors verbunden ist, aufweist, wobei sich das erste und das zweite Substrat (100, 200) gegenüberliegen;
eine erste Passivierungsschicht (46a), die auf dem Dünnschichttransistor gebildet ist;
ein erster Säulenabstandshalter (46b), um eine Zelllücke aufrechtzuerhalten, der einteilig mit der ersten Passivierungsschicht (46a) gebildet ist;
**gekennzeichnet durch**
einen zweiten Säulenabstandshalter (46c), der verhindert, dass das erste Substrat (100) heruntergedrückt wird, wobei der zweite Säulenabstandshalter (46c) einteilig mit der ersten Passivierungsschicht (46a) gebildet ist und eine geringere Höhe aufweist als der erste Säulenabstandshalter (46b), der das erste Substrat (100) kontaktiert; und
eine zweite Passivierungsschicht (48) zwischen dem Dünnschichttransistor und der ersten Passivierungsschicht (46a), um die Grenzflächenstabilität zu erhöhen, wobei die erste und die zweite Passivierungsschicht (46a, 48) voneinander verschiedene Materialien aufweisen;
wobei das Kontaktloch (46d), um die Drainelektrode (42d) freizulegen, in der ersten und der zweiten Passivierungsschicht (46a, 48) gebildet ist;
wobei die erste Passivierungsschicht (46a) und der erste und der zweite Säulenabstandshalter (46b, 46c) aus einem organischen Isoliermaterial, das ein ultravioletthärtbares flüssiges Vorpolymer, einen Photoinitiator und ein Tensid enthält, gebildet sind.

2. Flüssigkristallanzeigevorrichtung nach Anspruch 1, wobei der erste Säulenabstandshalter (46b) mit dem ersten Substrat (100) in Kontakt gebracht ist.

3. Flüssigkristallanzeigevorrichtung nach Anspruch 1, die ferner eine dritte Passivierungsschicht (49) auf der ersten Passivierungsschicht (46a) enthält.

4. Flüssigkristallanzeigevorrichtung nach Anspruch 1 oder 3, wobei die zweite Passivierungsschicht (48) und die dritte Passivierungsschicht (49) aus einem anorganischen Isolationsmaterial gebildet sind.

5. Verfahren zum Herstellen einer Flüssigkristallanzeigevorrichtung, das Folgendes umfasst:
Anfertigen eines ersten Substrats (100) mit einem Farbfilter (32);
Bilden eines Dünnschichttransistors auf einem zweiten Substrat (200), das dem ersten Substrat (100) gegenüberliegt;
Bilden einer zweiten Passivierungsschicht (48) auf dem zweiten Substrat (200) einschließlich des Dünnschichttransistors, um die Grenzflächenstabilität zu erhöhen;
Bilden einer Mustermaterialschicht (46) auf der zweiten Passivierungsschicht (48);
Ausrichten einer weichen Form (300) und des zweiten Substrats (200) einschließlich der Mustermaterialschicht (46), wobei die weiche Form mit einem Prägemuster (300b) für das Bilden eines Lochs, das dem Kontaktloch (46d) entspricht, und einem ersten eingedrückten Muster (300a) zum Bilden eines ersten Säulenabstandhalters (46b), um eine Zelllücke aufrechtzuerhalten, und einem zweiten eingedrückten Muster (300c) zum Bilden eines zweiten Säulenabstandhalters (46c), der das erste Substrat (100) daran hindert, heruntergedrückt zu werden, versehen ist,
Bilden einer ersten Passivierungsschicht (46a), die das Loch (46d), den ersten Säulenabstandshalter (46b) und den zweiten Säulenabstandshalter (46c) umfasst, durch Kontaktieren der weichen Form (300) mit der Mustermaterialschicht (46), wobei das Prägemuster (300b) den zweiten Passivierungsfilm (48) auf dem Dünnschichttransistor kontaktiert, wobei der erste Säulenabstandshalter (46b) eine Höhe aufweist, um das erste Substrat (100) zu kontaktieren und der zweite Säulenabstandhalter (46c) einer geringere Höhe aufweist als der erste Säulenabstandhalter (46b);
Trennen der weichen Form (300) von der Mustermaterialschicht (46); und
Ätzen der zweiten Passivierungsschicht (48) unter Verwendung der ersten Passivierungsschicht (46a) als Ätzmaske zum Bilden des Kontaktlochs (46d), um die Drainelektrode (42d) des Dünnschichttransistors freizulegen,
Bilden einer Pixelelektrode (43) in dem Kontaktloch (46d),
wobei die Mustermaterialschicht (46) aus einem organischen Isoliermaterial, das aus einem ultravioletthärtbaren flüssigen Vorpolymer, einem Photoinitiator und einem Tensid besteht, gebildet ist.

6. Verfahren nach Anspruch 5, wobei die weiche Form (300) aus PDMS (Polydimethylsiloxan) oder Polyurethan oder Polyimid gebildet ist.

7. Verfahren nach Anspruch 5, das ferner das Härten der Mustermaterialschicht (46) durch Anwendung von Wärme oder Licht auf das Substrat in dem Zustand des Kontaktierens der weichen Form (300) mit dem Substrat einschließlich der Mustermaterialschicht (46) umfasst.

8. Verfahren nach Anspruch 5, das ferner das Bilden einer dritten Passivierungsschicht (49) zwischen der ersten Passivierungsschicht (46a) und der Pixelelektrode (43) umfasst.

## Revendications

1. Dispositif d'affichage à cristaux liquides comprenant :
un premier substrat (100) comportant un filtre de couleur ; et
un deuxième substrat (200) comportant un transistor à couches minces et une électrode de pixel (43) connectée à une électrode de drain (42b) du transistor à couches minces à travers un trou de contact (46d), les premier et deuxième substrats (100, 200) étant l'un en face de l'autre ;
un premier film de passivation (46a) formé sur le transistor à couches minces ;
une première entretoise de colonne (46b) pour maintenir un écartement de cellule est formée d'un seul tenant avec le premier film de passivation (46b) ;
**caractérisé par** :
une deuxième entretoise de colonne (46c) empêchant le premier substrat (100) d'être pressé vers le bas, la deuxième entretoise de colonne (46c) est formée d'un seul tenant avec le premier film de passivation (46a) et ayant une hauteur inférieure à celle de la première entretoise de colonne (46b) contactant le premier substrat (100) ; et
un deuxième film de passivation (48) entre le transistor à couches minces et le premier film de passivation (46a) pour améliorer la stabilité interfaciale, les premier et deuxième films de passivation (46a, 48) ayant des matériaux différents l'un de l'autre ;
dans lequel le trou de contact (46d) pour exposer l'électrode de drain (42d) est formé dans les premier et deuxième films de passivation (46a, 48) ;
dans lequel le premier film de passivation (46a) et les première et deuxième entretoises de colonne (46b, 46c) sont faits d'un matériau isolant organique constitué d'un prépolymère liquide durcissant sous UV, d'un photo-initiateur et d'un agent tensio-actif.

2. Dispositif d'affichage à cristaux liquides selon la revendication 1, dans lequel la première entretoise de colonne (46b) est mise en contact avec le premier substrat (100).

3. Dispositif d'affichage à cristaux liquides selon la revendication 1, comprenant en outre un troisième film de passivation (49) sur le premier film de passivation (46a).

4. Dispositif d'affichage à cristaux liquides selon la revendication 1 ou 3, dans lequel le deuxième film de passivation (48) et le troisième film de passivation (49) sont faits d'un matériau isolant inorganique.

5. Procédé de fabrication d'un dispositif d'affichage à cristaux liquides comprenant les opérations suivantes :
préparer un premier substrat (100) comportant un filtre de couleur (32) ;
former un transistor à couches minces sur un deuxième substrat (200) situé en face du premier substrat (100) ;
former un deuxième film de passivation (48) sur le deuxième substrat (200) comprenant le transistor à couches minces pour améliorer la stabilité interfaciale ;
former une couche de matériau de motif (46) sur le deuxième film de passivation (48) ;
aligner un moule souple (300) et le deuxième substrat (200) comprenant la couche de matériau de motif (46), le moule souple (300) étant pourvu de motifs de gaufrage (300b) pour la formation d'un trou correspondant à un trou de contact (46d) et d'un premier motif en creux (300a) pour la formation d'une première entretoise de colonne (46b) pour maintenir un écartement de cellule et d'un deuxième motif en creux (300c) pour la formation d'une deuxième entretoise de colonne (46c) empêchant le premier substrat (100) d'être pressé vers le bas ;
former le premier film de passivation (46a) comportant le trou (46d), la première entretoise de colonne (46b) et la deuxième entretoise de colonne (46c) en mettant en contact le moule souple (300) avec la couche de matériau de motif (46), dans lequel le motif de gaufrage (300b) entre en contact avec le deuxième film de passivation (48) sur le transistor à couches minces, dans lequel la première entretoise de colonne (46b) a une hauteur lui permettant de toucher le premier substrat (100), et la deuxième entretoise de colonne (46c) a une hauteur inférieure à celle de la première entretoise de colonne (46b) ;
séparer le moule souple (300) de la couche de matériau de motif (46) ; et
graver le deuxième film de passivation (48) en utilisant le premier film de passivation (46a) comme masque de gravure pour former le trou de contact (46d) permettant d'exposer une électrode de drain (42d) du transistor à couches minces ;
former une électrode de pixel (43) dans le trou de contact (46d),
dans lequel la couche de matériau de motif (46) est faite d'un matériau isolant organique constitué d'un prépolymère liquide durcissant sous UV, d'un photo-initiateur et d'un agent tensio-actif.

6. Procédé selon la revendication 5, dans lequel le moule souple (300) est fait de n'importe quel matériau parmi le PDMS (polydiméthylsiloxane), le polyuréthane et le polyimide.

7. Procédé selon la revendication 5, comprenant en outre le durcissement de la couche de matériau de motif (46) en appliquant de la chaleur ou une lumière au substrat dans l'état où il est en contact avec le moule souple (300) au substrat comprenant la couche de matériau de motif (46).

8. Procédé selon la revendication 5, comprenant en outre la formation d'un troisième film de passivation (49) entre le premier film de passivation (46a) et l'électrode de pixel (43).
